# EUROPEAN PATENT SPECIFICATION

(11) **EP 3 260 250 B1**
(45) Date of publication and mention of the grant of the patent: **02.10.2019**
(21) Application number: 16175502.0
(22) Date of filing: 21.06.2016
(51) Int. Cl.: B25J 18/06, B25J 18/02, B25J 19/02

(54) **ROBOTIC SYSTEM FOR CONFINED SPACE OPERATIONS BACKGROUND**
ROBOTISCHES SYSTEM FÜR OPERATIONEN IN ENGEN RÄUMEN
SYSTÈME ROBOTIQUE POUR DES OPÉRATIONS DE FOND DE L'ESPACE CONFINÉ

(43) Date of publication of application: 27.12.2017
(73) Proprietor: Ansaldo Energia IP UK Limited, London W1G 9DQ (GB)
(72) Inventor: OTERO DEL REAL, Elena, 5400 Baden (CH); FISCHER, Wolfgang, 5400 Baden (CH); CARRASCO, Edgar Ernesto, 5400 Baden (CH); HUERZELER, Christoph, 5400 Baden (CH); PERALTA, Andres, 5400 Baden (CH); LOOSLI, Dominik, 5400 Baden (CH); SCHNEIDER, Thomas, 5400 Baden (CH); MORRIS, Thomas, 5400 Baden (CH)
(74) Representative: Studio Torta S.p.A.

(56) References cited:
- EP-A1- 0 512 774
- US-A- 5 411 043
- US-A1- 2002 108 644

## Description

### BACKGROUND

### Field of Endeavor

The present disclosure relates generally to robotics and, more particularly, to a robotic device or system including robotic arms for an environment, including but not limited to, confined and complex geometries, e.g. given by pipework or turbine flow-paths in a power plant, for applications, such as, inspection, manipulation, and in-situ repair.

### Brief Description of the Related Art

Robotic devices have been successfully utilized in many different applications, such as machining, assembly, inspection, repair and more. In spite of all of that, it has always been challenging to bring such devices into complex and confined geometries or environments. Conventional robotic devices may have the capability of accommodating various useful operations in non-confined geometries or environments but there is an on-going need for improved tools that may easily adapt to applications in confined and complex spaces.

In the context of industrial applications, robotic systems are a quite popular choice for inspection, repair or other manipulation tasks. For example, US Patent Publication Number 8374722 B2 discloses a robotic arm to inspect rotary machines such as a gas turbine engines. The arm has a plurality of groups of links having articulations therebetween for movement in a first plane, the groups having articulations with respect to each other for movement in a second plane. At the distal end of the arm a spatial tip section is installed comprised of a series of elements articulated for movement about both planes so as to be able to move in a snake-like manner. The actuated arm can move around objects such as airfoils in the engine, and also move up or down to remain close to the rotary surface of the machine. However, the device requires a complex actuation, sensing and control system to achieve the targeted manipulation tasks. This limits payload capabilities for an end-tool, achievable robustness as well as the minimal achievable dimensions for operations in confined space. In addition, highly trained operators are required for safe operation of the manipulation arm.

In another WO Patent Application Number WO 0216995, a robotic arm comprising a plurality of longitudinal segments, each of which is connected by a plurality links, is described. The end of each segment is "guided" by wires or thin sheets so that by varying the length of the wires, the arm can be actuated and bent. By adjusting the tension in the control wires for each segment, the arm can move and adopt various spatial shapes and configurations. This may be done for example by winding each control wire on or off a spindle using a motor. The motors are controlled for example by a computer control system. Similar to the system described in US Patent Publication Number 8374722 B2, a complex actuation, sensing and control system is necessary to achieve the desired operations in confined spaces.

While there are a number of other related prior arts directed towards the continuous improvement of robotic inspection and repair systems, there is a great need for new platforms which perform more and more complex operations within continuously smaller and more complex confined spaces (e.g. more and more complex and curved flow paths in gas turbines). This requirement goes hand in hand with ever increasing requirements for payload capacity, operation speed, simplicity and robustness.

EP 0 512 774 A1 discloses a robotic system comprising a main drive unit having, a mounting structure, and an arm storage unit coupled to the mounting structure. A non-actuated extendable arm unit with an elongated structure flexible and thin in the lateral plane, and rigid and wide in a vertical plane is coupled to the arm storage unit to be moved axially in a predefined direction in a lateral plane from the arm storage unit. An axial drive unit is coupled to the arm storage unit to axially extend and retract the non-actuated extendable arm unit from the arm storage unit. An arm guidance member is coupled to the arm storage unit to guide the non-actuated extendable arm unit in a predefined direction in the lateral plane during extension and retraction.

Another example of a known robotic system provided with an extendable arm is disclosed in US 2002/108644 A1.

### SUMMARY

A robotic system according to invention is defined by the features of claim 1.

A general object of the present disclosure is to provide the means to transport an end-tool along complex and confined geometries or environments for applications such inspection, maintenance, repair and other related operations. The general object of the invention is to provide a system which can bring increased payloads into complex, confined structures in a faster, simpler and more robust manner.

In one aspect of the present disclosure, a robotic system for operations, such as measurement and manipulation tasks in confined spaces and environments is provided. The robotic system disclosed herein may include a main drive unit, a non-actuated extendable arm unit, an axial drive, an arm guidance member and a head articulation unit. The main drive unit may include a mounting structure and an arm storage unit coupled to the mounting structure. Further, the non-actuated extendable arm unit may be coupled to the arm storage unit to be moved axially in a predefined direction in the lateral plane from the arm storage unit. The non-actuated extendable arm unit may include an elongated structure, flexible and thin in the lateral plane, and rigid and wide in a vertical plane. This extendable arm unit is non-actuated but constructed in a ways to exhibit spring like characteristics in its longitudinal direction. Consequently, it is the shape of the confined space environment which defines the shape of the extendable arm unit. Furthermore, the axial drive unit may be coupled to the arm storage unit to enable axial extension and retraction of the non-actuated extendable arm unit from the arm storage unit. The arm guidance member may be coupled to the arm storage unit to guide the non-actuated extendable arm unit in a predefined direction in the lateral plane during extension and retraction. Moreover, the head articulation unit may be coupled to a free end of the non-actuated extendable arm unit to actuate and move the non-actuated extendable arm unit in varying directions within confined spaces and environments in a "follow-the-leader" manner.

In one embodiment, the mounting structure may include a plurality of plates and poles arranged in relation to each other to form first and second levels within the main drive unit to accommodate the arm storage unit extending across the first and second levels. Further, the axial drive unit, as per this embodiment, is disposed in the second level of the mounting structure to enable the non-actuated extendable arm unit to axially extend and contract from the arm storage unit along the direction defined by the arm guidance member. The axial drive unit includes an axial drive motor; and an axial drive tower pinion and spring arrangement driven by the axial drive motor to axially extend and retract the extendable arm. It also includes an arm attachment coupled to the axial drive tower pinion and spring arrangement to axially guide the non-actuated extendable arm unit. Furthermore, the arm guidance member of this embodiment is coupled to the plates along the first level to guide the non-actuated extendable arm unit in a predefined direction in the lateral plane during axial extension and retraction of the non-actuated extendable arm unit from the arm storage unit with respect to the mounting structure. Moreover, the non-actuated extendable arm unit of this embodiment may include an elongated structure and a plurality of wire guides. The elongated structure includes a pair of flat flexible sheet elements disposed spaced-apart from each other in the vertical plane. Further, the plurality of wire guides positioned within the spaced pair of flat flexible sheet elements are also spaced in the vertical plane. This construction forms the non-actuated extendable arm unit which is flexible and thin in the lateral plane, and rigid and wide in a vertical plane. In addition, the structure as such exhibits spring-like characteristics along its longitudinal axis. Consequently, this embodiment of the extendable arm unit can be pushed into a predefined shape of an external infrastructure from the arm storage unit by naturally adapting its own shape in the lateral plane, while maintaining an axially directed force. As such, the main purpose of the extendable arm is transmitting the push force from the axial drive to the head articulation while adapting its shape to the given confined space.

The head articulation unit may include a flexible body extending between opposite ends, the flexible body having an interface end coupled to a free end of the extendable arm unit and a plurality of wires guides to couple the head articulation unit with a motor positioned/located within the main drive unit.

In another embodiment, the mounting structure may include a plurality of plates arranged in relation to each other to form first and second levels within the main drive unit to accommodate the arm storage unit in the first levels and casing arrangement covering the first and second levels. Further, the arm guidance member, as per this embodiment, may be coupled to the plates along the first level to guide the non-actuated extendable arm unit in a predefined direction in the lateral plane while axially extending or retracting non-actuated extendable arm unit from the arm storage unit. Furthermore, the axial drive unit may be coupled to plates outside of the mounting structure and extend in the mounting structure along the first level to enable the non-actuated extendable arm unit to axially extend and retract from the arm storage unit along the direction defined by the arm guidance member.

The axial drive unit as per this embodiment may include an axial drive motor, an axial drive gear and belt arrangement, and an arm attachment. The axial drive gear and belt arrangement may be driven by the axial drive motor. Further, the arm attachment may be coupled to the axial drive gear and belt arrangement to axially push or pull the non-actuated extendable arm unit. The arm attachment may be coupled to the non-actuated extendable arm unit. Further, the arm guidance member may be coupled along a side portion of the first level to guide the non-actuated extendable arm unit in a predefined direction in the lateral plane during axial extension and retraction of the non-actuated extendable arm unit from the arm storage unit with respect to the mounting structure. Furthermore, the non-actuated extendable arm unit may include a flexible sheet (such as e.g. spring steel) orientated in the vertical plane and a plurality of mechanical segments connected by mechanical joints, connected in series along the lateral side edges of the flexible sheet, effectively embedding the sheet within. The flexible sheet of the non-actuated extendable arm unit exhibits the necessary spring characteristics along the extendable arm's longitudinal axis to allow a payload to be pushed into the predefined shape of an external infrastructure while passively adapting the arm's shape in the lateral plane. In this context, the segmented joint structure encapsulating the sheet enables the required mechanical robustness and rigidity to support heavy payloads during insertion.

Finally, in this alternative embodiment, the head articulation unit may include a steering chain arrangement, having an interface end coupled to a free end of the extendable arm unit, a steering motor coupled to the steering chain arrangement, and a head roll joint coupled to the steering chain arrangement. In this embodiment, the head-roll joint enables an additional rotational degree of freedom aligned with the longitudinal axis of the extendable arm. It creates additional structural flexibility for this second more rigid embodiment of the non-actuated extendable arm unit which is inherent in the first, described embodiment. This rotational flexibility of the head articulation unit is expected to benefit applications where an end-tool needs to align with the orientation of different components in the confined space infrastructure..

The robotic system may further include a carrier platform to mount the main drive unit thereon to move the main drive unit along a predefined path. The carrier platform may include a carrier plate, a driving motor, and a guidance member. The carrier plate may be adapted to mount the main drive unit thereon. The driving motor may be coupled to the carrier plate to drive the carrier platform. The guidance member is coupled to the carrier plate to guide the main drive unit along the predefined path.

In one embodiment, the robotic system may further include an end tool attached to the head articulation unit. The end tool, in an example, may be an exchangeable inspection scanner. The exchangeable inspection scanner may include a spreading mechanism coupled to the head articulation unit, a back skid coupled to the spreading mechanism at one side, a probe holder having at least one probe, the probe holder coupled to the spreading mechanism on other side opposite to the back skid and a linear guidance coupled to the probe holder to guide the probe holder and probes. In another example, the end tool may be an exchangeable camera system. The camera system may be mounted to the head articulation unit for the purpose of visual inspection. An interface may be provided for the camera system to be coupled to the head articulation unit.

In one embodiment, the mounting structure may further includes a plurality of electronic components mounted on the mounting structure to enable operations including at least an electric power distribution, sensor data acquisition, motor control function, communication between a plurality of devices.

The term "non-actuated" used herein, such as "non-actuated extendable arm unit" means the extended arm unit is not self-actuated but requires a suitable means as described herein to be actuated. For a better understanding of the various aspects of the present disclosure, its operating advantages, and its uses, reference now should be made to the accompanying exemplary drawings.

### BRIEF DESCRIPTION OF THE DRAWINGS

The features and advantages of the present disclosure will be better understood with reference to the following description of a non-exclusive device embodiment, in conjunction with the accompanying drawings in which:
FIGS. 1A, 1B and 1C illustrate a robotic system, in accordance with one exemplary embodiment of the present disclosure;
FIGS. 2A, 2B and 2C illustrate a robotic system, in accordance with another exemplary embodiment of the present disclosure;
FIGS. 3A and 3B illustrate a main drive unit of the robotic system of FIGS. 1A-1C, in accordance with first exemplary embodiment of the present disclosure;
FIGS. 4A and 4B illustrate an extendable arm unit of the robotic system of FIGS. 1A-1C, in accordance with first exemplary embodiment of the present disclosure;
FIG. 5 illustrates an axial drive unit of the robotic system of FIGS. 1A-1C, in accordance with first exemplary embodiment of the present disclosure;
FIG. 6A-6E illustrate a head articulation unit of the robotic system of FIGS. 1A-1C, in accordance with first exemplary embodiment of the present disclosure;
FIGS. 7A and 7B illustrate a main drive unit of the robotic system of FIGS. 2A-2C, in accordance with second exemplary embodiment of the present disclosure;
FIGS. 8A and 8B illustrate an extendable arm unit of the robotic system of FIGS. 2A-2C, in accordance with second exemplary embodiment of the present disclosure;
FIGS. 9A and 9B illustrate an axial drive unit of the robotic system of FIGS. 2A-2C, in accordance with second exemplary embodiment of the present disclosure;
FIGS. 10A and 10B illustrate a head articulation unit of the robotic system of FIGS. 2A-1C, in accordance with second exemplary embodiment of the present disclosure;
FIGS. 11A and 11B illustrate end tool, in accordance with an exemplary embodiment of the present disclosure;
FIGS. 12A and 12B illustrate a carrier platform, in accordance with an exemplary embodiment of the present disclosure; and
FIGS. 13A and 13B illustrate an example environment where the robotic system may be utilized for purposes, such as inspection, manipulation or repair.

Like reference numerals refer to like parts throughout the description of several views of the drawings.

### DETAILED DESCRIPTION OF EXEMPLARY EMBODIMENTS

For a thorough understanding of the present disclosure, reference is to be made to the following detailed description, including the appended claims, in connection with the above-described drawings. In the following description, for purposes of explanation, numerous specific details are set forth in order to provide a thorough understanding of the present disclosure. It will be apparent, however, to one skilled in the art, that the present disclosure can be practiced without these specific details. In other instances, structures and devices are shown in block diagram form only, in order to avoid obscuring the disclosure. Reference in this specification to "one embodiment," "an embodiment," "another embodiment," "various embodiments," means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but may not be of other embodiment's requirement.

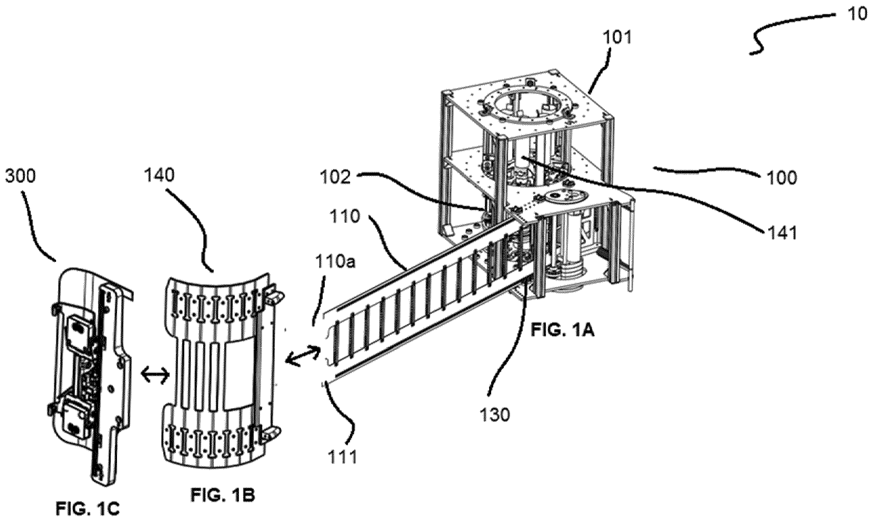

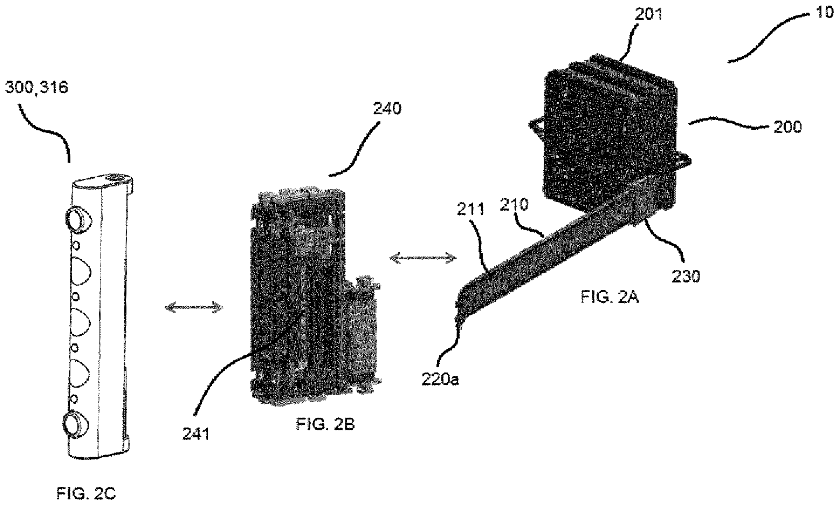

Referring to FIGS. 1A to 13B, various embodiments and components of a robotic system 100 are depicted in accordance with various exemplary embodiments of the present disclosure. The robotic system 10 may be utilized in various environments, for application including, but not limited to, inspection, manipulation and repair.

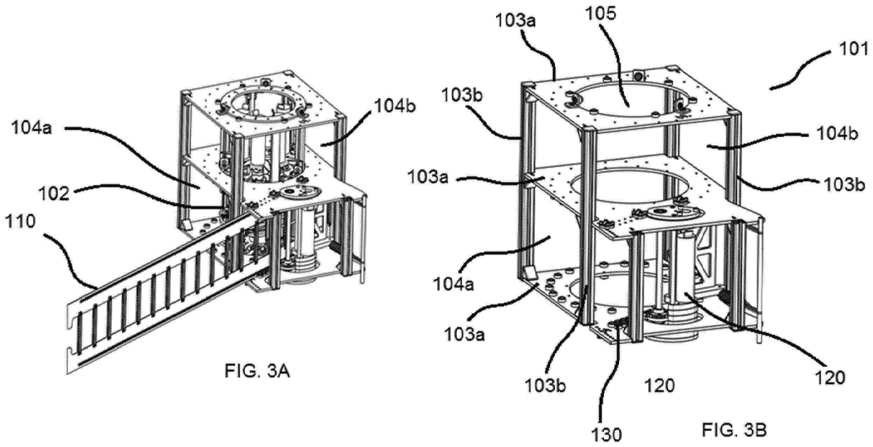

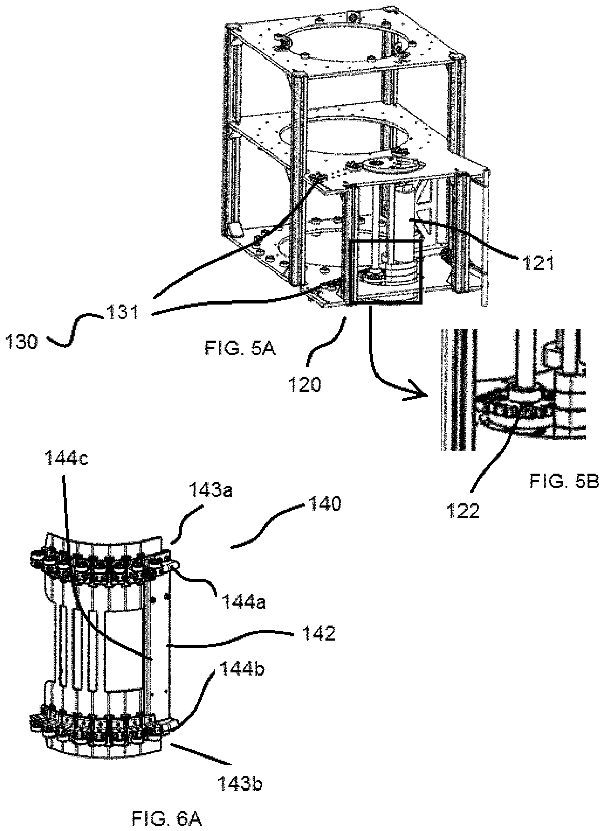

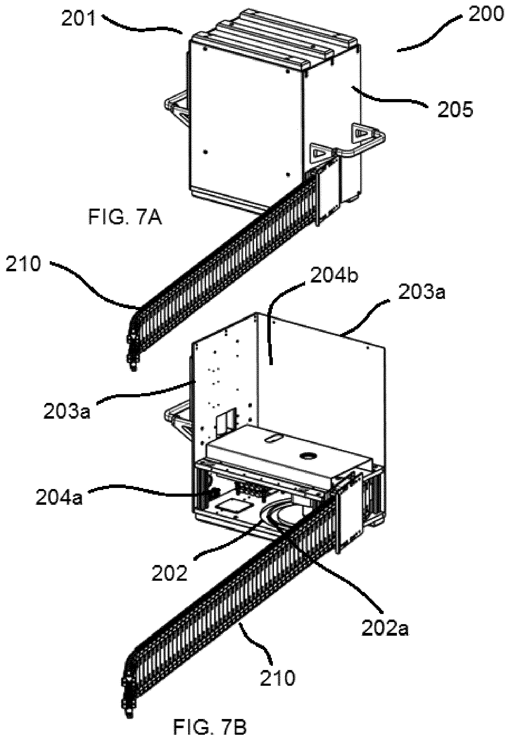

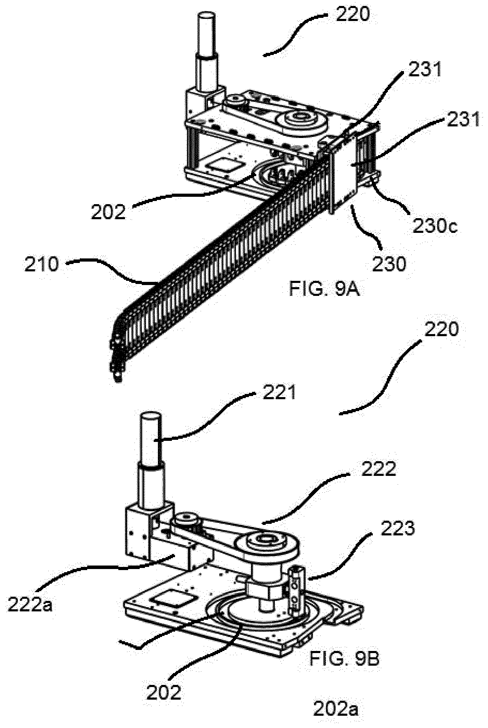

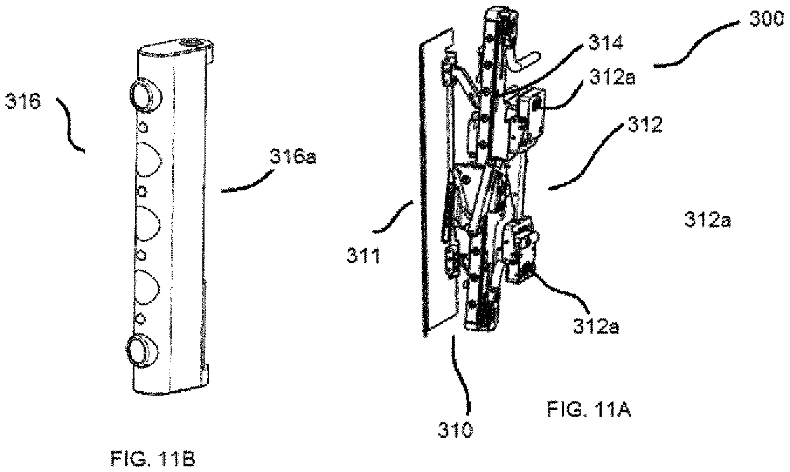

FIGS. 1A to 2C broadly depict a robotic system 10 in accordance with various embodiments of the present disclosure. The robotic system 10 includes a main drive unit 100, 200, a non-actuated extendable arm unit 110, 210, an axial drive unit 120, 210 (shown in FIGS. 5A and 9A-9B), an arm guidance member 130, 230, and a head articulation unit 140, 240. The main drive unit 100, 200 may include a mounting structure 101, 201, and an arm storage unit 102, 202 (shown in FIGS. 3A and 7B) coupled to the mounting structure101, 201. Further, the non-actuated extendable arm unit 110, 210 may be coupled to the arm storage unit 102, 202 to be moved axially in a predefined direction in a lateral plane from the arm storage unit 102, 202. The non-actuated extendable arm unit 110, 210 may include an elongated structure 111, 211 flexible and thin in the lateral plane, and rigid and wide in a vertical plane. Furthermore, the axial drive unit 120, 220 may be coupled to the arm storage unit 102, 202 to enable axial extension and retraction of the non-actuated extendable arm unit 110, 220 from the arm storage unit 102, 202. The arm guidance member 130, 230 may be coupled to the arm storage unit 102, 202 to guide the non-actuated extendable arm unit 110, 220 in a predefined direction in the lateral plane during extension and retraction. Moreover, the head articulation unit 140, 240 may be coupled to a free end 110a, 210a of the non-actuated extendable arm unit 110, 220 to actuate and move the non-actuated extendable arm unit 110, 220 in varying directions in the confined spaces and environments. To actuate the head articulation unit 140, 240, head articulation motors 141, 241 may be configured selectively on the mounting structure 101 or within the head articulation unit 240 itself. Moreover, end tools may be coupled to the head articulation unit 140, 240 and will be described with reference to FIGS. 11A and 11B.

Referring now to FIGS. 3A to 6E, as per one embodiment of the present disclosure, the robotic system 10 will be described in detail. In FIGS. 3A and 3B, the main drive unit 100, having the mounting structure 101 and the arm storage unit 102 coupled to the mounting structure 101 is depicted. The mounting structure 101 may include a plurality of plates 103 a and poles 103b arranged in relation to each other to form first and second levels 104a, 104b within the main drive unit 103 to accommodate the arm storage unit 102 which extends across the first and second levels 103a, 103b. As depicted in example FIGA. 3A and 3B, three plates 103a are horizontally disposed one above other in spaced manner and supported by poles 103b which are disposed along the corners of the plates 103a to obtain a rigid mounting structure 101. The first level 104a of the mounting structure 101 is obtained between the above two plates 103a, and the second level 104b of the mounting structure 101 is obtained between the below two plates 103a, middle plate 103a being common to both the first 104a and second 104b levels. Further, each plate 102a may include an opening 105 that is axially aligned with the openings of the other plates. The axially aligned openings 105 may be capable of rotatably accommodating the arm storage unit 102 extending in the first 104a and second 104b levels. In an example form, the arm storage unit 102 may be a rotatable drum aligned and extending along the first and second levels 104a, 104b of the mounting structure 101.

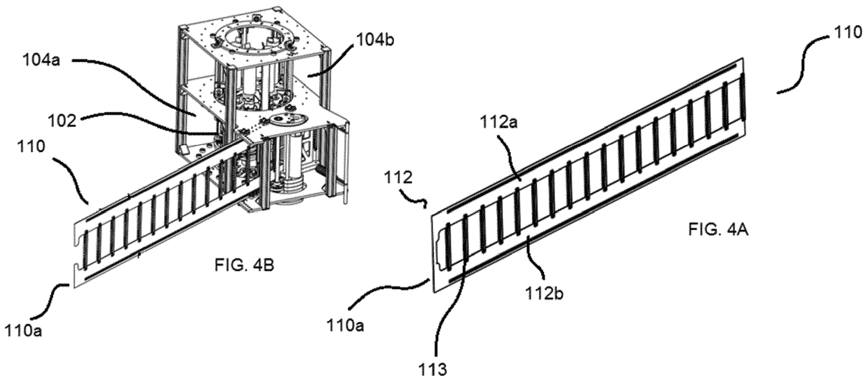

As depicted in FIGS. 4A, 4B and 5A and 5B, and described in conjunction with FIGS. 1A-1C and 3A-3B, the axial drive unit 120 and the non-actuated extendable arm unit 110 (hereinafter will be referred to as 'arm unit 110') as per this embodiment may be disposed in the first level 104b of the mounting structure 101 to enable the arm unit 110 to axially extend and contract from the arm storage unit 102 along the direction defined by the arm guidance member 130. Further, the arm guidance member 130 (hereinafter referred to as 'guidance member 130') of this embodiment may be coupled to the plates 103a along the first level 104a to guide the arm unit 110 in the lateral plane during axial extension and retraction of the arm unit 110 from the arm storage unit 102 with respect to the mounting structure 101. The axial drive unit 120, guidance member 130 and the non-actuated arm unit 110 of the present embodiment will be described with reference to example FIGS. 4A- 4B and 5A-5B.

The axial drive unit 120 includes an axial drive motor 121, an axial drive tower pinion and spring arrangement 122 (hereinafter will be referred to as 'drive tower 122') and an arm attachment 123. The drive tower 122 is driven by the axial drive motor 121 to axially expand and contract the arm unit 110. The arm attachment 123 is coupled to the drive tower 122 to axially guide the arm unit 110.

The arm guidance member 130 may be coupled to the plates 103a of the first level 104a to guide the arm unit 110 in a predefined direction in the lateral plane during axial extension and retraction of the arm unit 110 from the arm storage unit 102 with respect to the mounting structure 101. The arm guidance member 130 may include a set of rollers 131 configured on both of the plates 103a of the first level 104a through which the arm unit 110 may pass and be guided therebetween to enable axial expansion and contraction of the arm unit 110.

Further, the arm unit 110 may include an elongated structure 112 having a pair of flat flexible sheet elements 112a, 112b (hereinafter "sheet 112a/112b") disposed spaced-apartly from each other in the vertical plane. The sheets 112a/112b may be made, for example, of fiber glass without departing the scope of being made of other material having flexibility and strength enough to meet the industrial requirement. Further, the arm unit 110 may include a plurality of wires guides 113 that may be disposed within the spaced pair of sheets 112a/112b in spaced manner to provide additional rigidity to the structure. These wire guides 113 are disposed within the spaced pair of sheets 112 in spaced manner along the longitudinal direction of the sheets 112. The sheets 112 and wire guides 113 define the arm unit 110 that is flexible and thin in the lateral plane, and rigid and wide in a vertical plane, and which exhibits spring-like characteristics along its longitudinal axis. This enables the arm unit 110 to be pushed into a predefined shape of the external infrastructure, from the arm storage unit 102 by passively adapting its own shape in the lateral plane through its free end 110a.

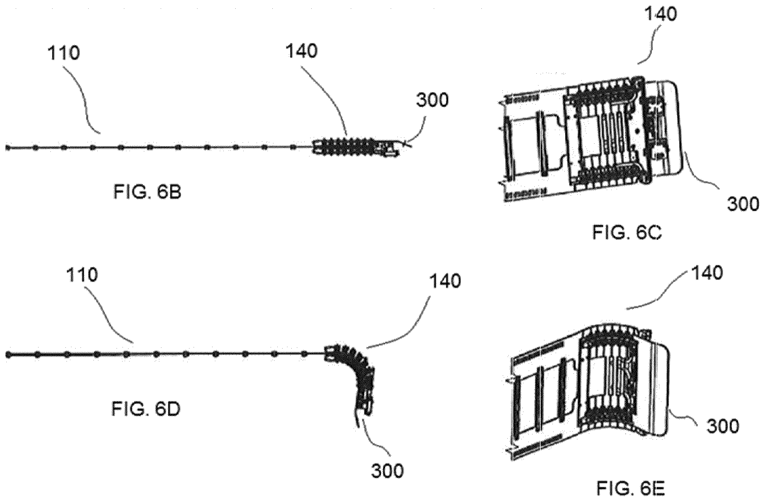

In one embodiment, the wire guides 113 may contain longitudinally extending rods having distal ends with holes (not shown for clarity). As per this embodiment, the wire guides 113 may incorporate wires, such as Bowden cables (not shown for clarity) passing through the holes to actuate the head articulation unit 140 to steer the non-actuated arm unit 110 by actively adapting its own shape in the lateral plane through its free end 110a. For that purpose, as shown in FIG. 6A, the head articulation unit 140 may include a flexible body 142 extending between opposite ends 143a, 143b. The opposite ends 143a, 143b respectively include upper and lower steering wires attachments 144a, 144b for actuating the flexible body 142 in a desired manner by actuating the wires 144a, 144b through the head articulation motors 141. Further, the flexible body 142 includes an interface end 144c coupled to a free end of the arm unit 110 through which wires pass to be coupled to the end tool 300. The steering wires attachments 144a, 144b with the wires couple the head articulation unit 140 with the head articulation motors 141 (see FIG. 4B) disposed in the main drive unit 101 to transmit mechanical movement from the head articulation motors 141 installed on the mounting structure 101 along the second level 104b to the head articulation unit 140. The head articulation unit 140 with the flexible body 142 and motor 141 may be capable of enabling steering or twisting movements (head-roll degree of freedom) of head articulation unit 140, and ultimately to move the end tool 300 in desired direction. By moving the head articulation motors 141 installed on the mounting structure 101 in same direction the steering is achieved while by moving the motors 141 in opposite directions head twisting is achieved. In addition, the wire guides 113 may also include electrical transmission cables (not shown for clarity) that may provide electrical data or power signals to motors and/or sensors embedded in the head articulation unit 140 and/or end-tool.

FIGS. 6B-6E illustrates various examples in which the unit 110 may be moved by the head articulation unit 140 that is driven by the at least one of the motor drive arrangements 141 configured in the mounting unit 101 to enable the end tool 300 towards the targeted area in the environment. FIGS. 6B and 6C respectively illustrate top and isometric views of the arm unit 140 and the end tool 300 when the head articulation unit 140 enables the arm unit 110 to move straight in forward to backward direction in the given confined environment. FIGS. 6C and 6D respectively illustrate top and isometric views of the arm unit 110 and the end tool 300 when the head articulation unit 300 enables the arm unit 110 to move left or right in the confined space environment.

Referring now to FIGS. 7A to 10B, another embodiment of the robotic system 10 is described. The main drive unit 200 of this embodiment, similar to above, includes a mounting structure 201 and the arm storage unit 202 coupled to the mounting structure 201. The mounting structure 201 incudes a plurality of plates 203a arranged in relation to each other to form first and 204a second 204b levels within the main drive unit 200 to accommodate the arm storage unit 202 in the first level 204a. The mounting structure of this embodiment also includes casing arrangement 205 for covering the first and second levels 204a, 204b. Further, the arm storage unit 202 coupled to the mounting structure 201 is positioned in the first level 204a. As seen in FIG. 7B, the arm storage unit 202 may include spiral grooves 202a engraved in the upper and lower plates 203a to store the arm unit 210 therealong.

Furthermore, the axial drive unit 220, as seen FIGS. 9A-9B as described in conjunction to FIGS. 7A-8C, may be coupled to plates 203a outside of the mounting structure 201 and extend in the mounting structure 201 along the second level 204b to enable the arm unit 210 to axially extend and contract from the arm storage unit 202 along the direction defined by the arm guidance member 230. The axial drive unit 220 as per this embodiment may include an axial drive motor 221, an axial drive gear and belt arrangement 222 coupled with a gear box 222a, and an arm attachment 223. The axial drive gear and belt arrangement 222 is driven by the axial drive motor 221 with the help of gear box 222a. The arm attachment 223 may be coupled to the arm unit 210 to drive the arm unit 210.

Further, the arm guidance member 230 may be coupled to the plates 203a along the first level 204a to guide the arm unit 210 in a predefined direction in the lateral plane during axial extension and retraction of the arm unit 210 from the arm storage unit 202 with respect to the mounting structure 201. In one example arrangement, as shown in FIG. 9A, the arm guidance member 230 may be coupled along a side portion 230c of the first level 204a to guide the arm unit 210. As per this arrangement, the arm guidance member 230 includes a set of two plates 231 arranged vertically and in spaced manner from each other. Through the spaced plates 231, the arm unit 210 is advanced to expand or contract from and on the arm storage unit 202 and supported by a set of arm guidance member 230.

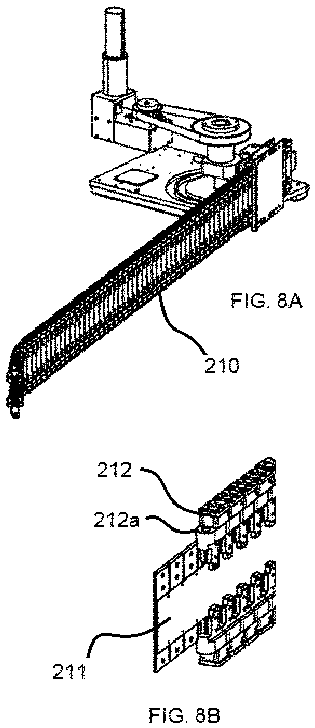

Furthermore, the arm unit 210 (seen in FIGS. 8A-8B) of this embodiment may include a sheet structure 211 embedded a plurality of mechanical segments 212. The sheet 211 may be made, for example, of spring steel without departing the scope of being made of other material having flexibility and strength enough to meet the industrial requirement. The flexible sheet 211 extends in the lateral plane and the various mechanical segments 212 coupled by mechanical joints 212a are mounted laterally along the sheet 211 to obtain the arm unit 210. As in the first described embodiment, the arm unit 210 also flexible and thin in the lateral plane, and rigid and wide in a vertical plane, exhibits spring-like characteristics along its longitudinal axis to be pushed from the arm storage unit 202 into a predefined shape of an external infrastructure, by passively adapting its own shape in the lateral plane.

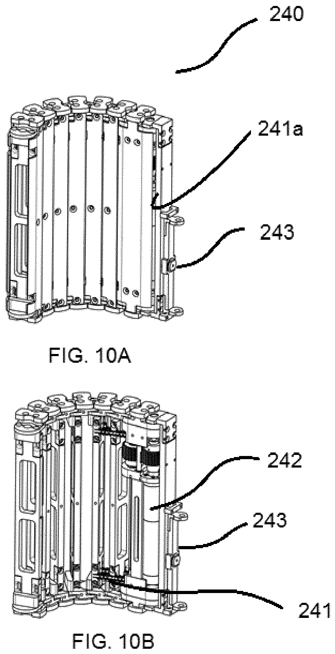

The head articulation unit 240, as seen FIGS. 10A-10C and as described in conjunction with FIGS. 7A-9C, may be configured to the arm unit 210. The head articulation unit 240 may include a steering chain arrangement 241, a steering motor 242 and a head roll joint 243. The head articulation unit 240 includes an interface end 241a coupled to a free end of the arm unit 210. The steering motor 242 is installed in the head articulation unit 240. Further, the steering motor 242 is coupled to the steering chain arrangement 241 to actuate the steering chain 241. The steering chain arrangement 241 may extend from the steering motor 242 of the head articulation unit 240 to the tip of the head articulation unit 240.

Referring now to FIGS. 11A and 11B, the robotic system 10 may further include various kinds of end tools 300 depending as per the requirement and nature of the job to be carried out by the robotic system 10. In the context of this disclosure, the robotic system 10 may be utilized for the purpose of inspection and will be described accordingly, without departing from the scope of being utilized for other applications. For the purpose of inspection, the end tool 300 may be an exchangeable inspection scanner 300. The exchangeable inspection scanner 300 may be configured to the head articulation unit 140, 240 to scan a specific surface area in a given confined space environment using methods such as ultrasound or eddy current inspection. In an example embodiment, as shown in FIGS. 11A, the exchangeable inspection scanner 300 may include a spreading mechanism 310, a back skid 311, a probe holder 312, and a linear guidance 314. The spreading mechanism 310 may be coupled to the head articulation unit 140, 240. The back skid 311 may be coupled to the spreading mechanism 310 at one side and the probe holder 312 may be coupled to the spreading mechanism 310 on other side opposite to the back skid 311. The probe holder 312 is capable of holding at least one measurement probe 312a, for example for non-destructive testing. Further, the linear guidance 314 may be coupled to the probe holder 312 to guide the probe holder 312 and probes 312a linearly along the linear guidance 314. The spreading mechanism 310 enables the probe holder 312 and probes 312a to extend transversely in to the structure for inspection as for example between the opposing airfoils of gas turbine blades.

In one embodiment, the end tool 300 may be an exchangeable camera system 316 mounted to the head articulation unit 140, 240 for the purpose of visual inspection, such exchangeable camera system 316 may include an interface 316a for the camera to be coupled to the head articulation unit 140, 240.

In one embodiment, the mounting structure 101, 202 may further includes a plurality of electronic components (not shown) mounted on the mounting structure 101, 202 to enable operations including at least an electric power distribution, sensor data acquisition, motor control function, communication between a plurality of devices. The electronic components may be disposed in the mounting structure 101, 202 in the second level 104b, 204b. In one embodiment, various wiring arrangements (not shown) are configured to respective units to electrically transmit data signals and electric power along the respective unit.

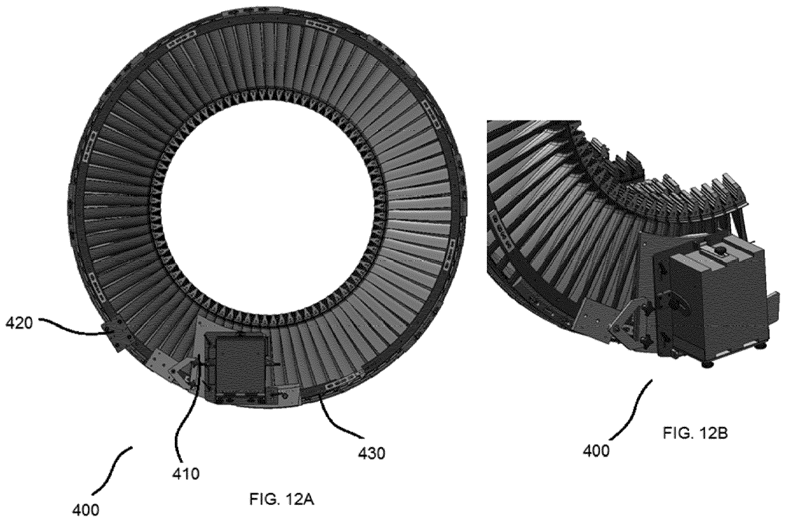

As shown in FIGS. 12A and 12B, the robotic system 10 may further include a carrier platform 400 to mount the main drive unit 100, 200 thereon to move the main drive unit 100, 200 along a predefined path. The carrier platform 400 may include a carrier plate 410, a driving motor 420, and a guidance member 430. The carrier plate 410 may be adapted to mount the main drive unit 100, 200 thereon. The driving motor 420 may be coupled to the carrier plate 400 to drive the carrier platform 410. The guidance member 430 is coupled to the carrier plate 410 to guide the main drive unit 100, 200 along the predefined path. The carrier platform 400 may be driven in a direction, such as linear direction, circular direction or omnidirectional as per the need, depending upon an environment in which the robotic system 10 may be used. For example, if the carrier platform 400 is moved in a circular direction along the circumference of an object, the main drive unit 100, 200 installed on the carrier platform 400 moves a with the a platform 400 along the given circular path.

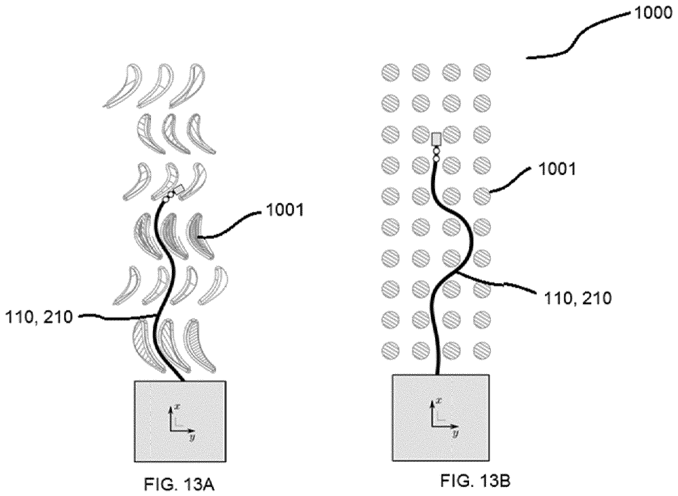

FIGS. 13A and 13B depict an environment 1000 where the robotic system 10 of the present disclosure may be utilized for the purpose of inspection. The environment 1000 may be turbine blades 1001 along the rotor and stator of a gas turbine where the robotic system 10 may be used for inspection purposes. However, without departing from the scope of the present disclosure, there may be other environments where the robotic system 10 may be utilized as per the requirement.

While the disclosure has been described in terms of preferred embodiments, those skilled in the art will recognize that the invention can be practiced with modification within the scope of the appended claims.

### REFERENCE NUMERAL LIST

- 10: Robotic system
- 100, 200: Main drive unit
- 101, 201: Mounting structure
- 102, 202: Arm storage unit
- 103a, 203a: Plates
- 103b: Poles
- 104a, 204a: First level
- 104b, 204b: Second level
- 105: Opening
- 205: Casing arrangement
- 110, 210: Non-actuated extendable arm unit
- 110a, 210a: Free end
- 111, 211: Flexible sheet arrangement
- 112: Elongated structure
- 112a, 112b: Pair of flat flexible sheet elements
- 113: Wires guides
- 211: Flexible elongated sheet
- 212: Mechanical joints
- 120, 220: Axial drive unit
- 121: Axial drive motor
- 122: Axial drive tower pinion and spring arrangement
- 123: Arm attachment
- 221: Axial drive motor
- 222: Axial drive gear and belt arrangement
- 222a: Gear box
- 223: Arm attachment
- 130, 230: Arm guidance member
- 131: Rollers
- 230c: Side portion
- 231: Set of two plates
- 140, 240: Head articulation unit
- 141: Head articulation motors
- 142: Flexible body
- 143a, 143b: Opposite ends
- 144a, 144b: Upper and lower steering wires attachments
- 144c: Interface end
- 241: Steering chain arrangement
- 242: Steering motor
- 243: Head roll joint
- 241a: Interface end
- 300: End tool, exchangeable scanner
- 310: Spreading mechanism
- 311: Back skid
- 312: Probe holder
- 312a: Probes
- 314: Linear guidance
- 316: Exchangeable camera system
- 316a: Interface
- 400: Carrier platform
- 410: Carrier plate
- 420: Driving motor
- 430: Guidance member
- 1000: Environment
- 1001: Turbine blades

## Claims

1. A robotic system (10) for operations, such as measurement and manipulation tasks in confined spaces and environments, the robotic system (10), comprising
a main drive unit (100, 200) having,
a mounting structure (101, 201), and
an arm storage unit (102, 202) coupled to the mounting structure (101, 201);
a non-actuated extendable arm unit (110, 210) coupled to the arm storage unit (102, 202) to be moved axially in a predefined direction in a lateral plane from the arm storage unit (102, 202), the non-actuated extendable arm unit (110, 210) having an elongated structure (111,211) flexible and thin in the lateral plane, and rigid and wide in a vertical plane;
an axial drive unit (120, 220) coupled to the arm storage unit (102, 202) to axially extend and retract the non-actuated extendable arm unit (110, 210) from the arm storage unit (102, 202);
an arm guidance member (130, 203) coupled to the arm storage unit (102, 202) to guide the non-actuated extendable arm unit (110, 210) in a predefined direction in the lateral plane during extension and retraction; **characterised in that** the robotic system (10) comprises
a head articulation unit (14, 240) coupled to a free end (110a, 210a) of the non-actuated extendable arm unit (110, 210) to actuate and move the non-actuated extendable arm unit (110, 210) in varying directions in the confined spaces and environments.

2. A robotic system (10) as claimed in claim 1, further comprising a carrier platform (400) to mount the main drive unit (100, 200) thereon to move the main drive unit along a predefined path, wherein the carrier platform (400) comprises:
a carrier plate (410) adapted to mount the main drive unit (100, 200) thereon;
a driving motor (420) coupled to the carrier plate (410) to drive the carrier platform (400); and
a guidance member (430) coupled to the carrier plate (410) to guide the main drive unit (100, 200) along the predefined path.

3. The robotic system (10) as claimed in claim 1, wherein the mounting structure (101) comprises:
a plurality of plates (103a) and poles (103b) arranged in relation to each other to form first (104a) and second (104b) levels within the main drive unit (100) to accommodate the arm storage unit (102) extending across the first (104a) and second (104b) levels and wherein the axial drive unit (120) is disposed in the first level (104a) of the mounting structure (101) to enable the non-actuated extendable arm unit (110) to axially extend and retract from the arm storage unit (102) along the direction defined by the arm guidance member (130).

4. The robotic system (10) as claimed in claim 3, wherein the axial drive unit (120) comprises:
an axial drive motor (121); and
an axial drive tower pinion and spring arrangement (122) driven by the axial drive motor (121) to axially expand and contract the non-actuated extendable arm unit (110); and
an arm attachment (123) coupled to the axial drive tower pinion and spring arrangement (122) to axially guide the non-actuated extendable arm unit (110) and wherein the arm guidance member (130) is coupled to the plates (103a) along the first level (104a) to guide the non-actuated extendable arm unit (110) in a predefined direction in the lateral plane during axial extension and retraction of the non-actuated extendable arm unit (110) from the arm storage unit (102) with respect to the mounting structure (101).

5. The robotic system (10) as claimed in claim 1, wherein the non-actuated extendable arm unit (110) comprises:
an elongated structure (112) having a pair of flat flexible sheets elements (112a, 112b) oriented spaced-apartly from each other in lateral plane; and
a plurality of wire guides (113) vertically positioned within the spaced pair of flat flexible sheet elements (112a, 112b) in spaced manner in the lateral plane to obtain the non-actuated extendable arm unit (110) flexible and thin in the lateral plane, and rigid and wide in a vertical plane to exhibits spring-like characteristics along its longitudinal axis to be pushed into a predefined shape of an external infrastructure, from the arm storage unit by passively adapting its own shape in the lateral plane.

6. The robotic system (10) as claimed in claim 1, wherein the head articulation unit (140) comprises:
a flexible body (141) extending between opposite ends (143a, 143b), the flexible body (141) having an interface end (144c) coupled to the free end (110a) of the non-actuated extendable arm unit (110); and
a plurality of wires to couple the head articulation unit (140) with a head articulation motor (141) positioned within the main drive unit (100).

7. The robotic system (10) as claimed in claim 1, wherein the mounting structure (201) comprises:
a plurality of plates (203 a) arranged in relation to each other to form first (204a) and second (204b) levels within the main drive unit (200) to accommodate the arm storage unit (202) in the first level (204a); and
a casing arrangement (205) covering the first and second levels (204a, 204b).

8. The robotic system (10) as claimed in claim 7, wherein the arm guidance member (230) is coupled to the plates (203a) along the first level (204a) to guide the non-actuated extendable arm unit (210) in a predefined direction in the lateral plane while axial extension and retraction of the non-actuated extendable arm unit (210) from the arm storage unit (202) with respect to the mounting structure (201) and wherein
the axial drive unit (220) is coupled to plates (203a) outside of the mounting structure (201) and extends in the mounting structure (201) along the second level (204b) to enable the non-actuated extendable arm unit (210) to axially extend and retract from the arm storage unit (202) along the direction defined by the arm guidance member (230).

9. The robotic system (10) as claimed in claim 8, wherein the axial drive unit (220) comprises:
an axial drive motor (221);
an axial drive gear and belt arrangement (222) driven by the axial drive motor (221);
and
an arm attachment (123) coupled to the axial drive gear and belt arrangement (222) to be driven to axially guide the non-actuated extendable arm unit (210), wherein the arm attachment (123) is coupled to the non-actuated extendable arm unit (210).

10. The robotic system (10) as claimed in claim 8, wherein the arm guidance member (230) is coupled along a side portion of the first level (204a) to guide the non-actuated extendable arm unit (210) in a predefined direction in the lateral plane during axial extension and retraction of the non-actuated extendable arm unit (210) from the arm storage unit with respect to the mounting structure (201).

11. The robotic system (10) as claimed in claim 1, wherein the non-actuated extendable arm unit (210) comprises:
a flexible elongated sheet (211) disposed in lateral plane to obtain the non-actuated extendable arm unit flexible and thin in the lateral plane, and
a plurality of mechanical segments (212), connected by mechanical joints (212a), in series, and positioned along the lateral side edges of the flexible sheet (211) to obtain the non-actuated extendable arm unit (210) rigid and wide in the vertical plane to be pushed into a predefined shape of an external infrastructure, from the arm storage unit (202) by passively adapting its own shape in the lateral plane.

12. The robotic system (10) as claimed in claim 11, wherein the head articulation unit (240) comprises an interface end (241a) coupled to the free end (210a) of the non-actuated extendable arm unit (210), the head articulation unit (240) comprising:
a steering chain arrangement (241) extending across the mechanical segments of the head articulation unit (240) by passing through the mechanical segments (212) and joints (212a),
a steering motor (242) coupled to the steering chain arrangement (241) to actuate the steering chain arrangement (241) non-actuated, and
a head roll joint (243) having a rotational degree of freedom, and coupled to the steering chain arrangement (241).

13. The robotic system (10) as claimed in claim 1, further comprising an end tool (300) attached to the head articulation unit (140, 240).

14. The robotic system (10) as claimed in claim 13, the end tool (300) comprising an exchangeable inspection scanner having:
a spreading mechanism (310) coupled to the head articulation unit (140, 240),
a back skid (311) coupled to the spreading mechanism (310) at one side,
a probe holder (312) having at least one probe (312a), the probe holder (312) coupled to the spreading mechanism (310) on other side opposite to the back skid (311), and
a linear guidance (314) coupled to the probe holder (312) to guide the probe holder (312) and probes (321a).

15. The robotic system (10) as claimed in claim 14, wherein the end tool (300) is an exchangeable camera system (316) mounted to the head articulation unit (140, 240) for the purpose of visual inspection, and
an interface (316a) for the camera system to be coupled to the head articulation unit (140, 240).

## Patentansprüche

1. Robotersystem (10) für Operationen, wie Mess- und Manipulationsaufgaben in beengten Räumen und Umgebungen, wobei das Robotersystem (10) umfasst:
eine Hauptantriebseinheit (100, 200), die aufweist:
eine Montagestruktur (101, 201) und
eine Armspeichereinheit (102, 202), die mit der Montagestruktur (101, 201) gekoppelt ist;
eine nicht betätigte ausfahrbare Armeinheit (110, 210), die mit der Armspeichereinheit (102, 202) gekoppelt ist, um axial in einer vorbestimmten Richtung in einer Lateralebene ausgehend von der Armspeichereinheit (102, 202) bewegt zu werden, wobei die nicht betätigte ausfahrbare Armeinheit (110, 210) eine langgestreckte Struktur (111, 211) aufweist, die in der Lateralebene flexibel und dünn ist, und in einer vertikalen Ebene starr und breit ist;
eine Axialantriebseinheit (120, 220), die mit der Armspeichereinheit (102, 202) gekoppelt ist, um die nicht betätigte ausfahrbare Armeinheit (110, 210) axial aus der Armspeichereinheit (102, 202) auszufahren und einzufahren;
ein Armführungselement (130, 203), das mit der Armspeichereinheit (102, 202) gekoppelt ist, um die nicht betätigte ausfahrbare Armeinheit (110, 210) während des Ausfahrens und des Einfahrens in einer vorbestimmten Richtung in der Lateralebene zu führen;
**dadurch gekennzeichnet, dass** das Robotersystem (10) umfasst:
eine Kopfgelenkeinheit (14, 240), die mit einem freien Ende (110a, 210a) der nicht betätigten ausfahrbaren Armeinheit (110, 210) gekoppelt ist, um die nicht betätigte ausfahrbare Armeinheit (110, 210) in den beengten Räumen und Umgebungen in veränderlichen Richtungen zu betätigen und zu bewegen.

2. Robotersystem (10) nach Anspruch 1, ferner eine Trägerplattform (400) umfassend, um darauf die Hauptantriebseinheit (100, 200) zu montieren, um die Hauptantriebseinheit entlang einer vorbestimmten Bahn zu bewegen, wobei die Trägerplattform (400) umfasst:
eine Trägerplatte (410), die dafür ausgelegt ist, die Hauptantriebseinheit (100, 200) darauf zu befestigen;
einen mit der Trägerplatte (410) gekoppelten Antriebsmotor (420) zum Antreiben der Trägerplattform (400); und
ein mit der Trägerplatte (410) gekoppeltes Führungselement (430) zum Führen der Hauptantriebseinheit (100, 200) entlang der vorbestimmten Bahn.

3. Robotersystem (10) nach Anspruch 1, wobei die Montagestruktur (101) umfasst:
mehrere Platten (103a) und Stangen (10313), die in Bezug zueinander so angeordnet sind, dass sie erste (104a) und zweite (104b) Ebenen innerhalb der Hauptantriebseinheit (100) bilden, um die Armspeichereinheit (102) aufzunehmen, die sich über die erste (104a) und die zweite (104b) Ebene erstreckt, und wobei die Axialantriebseinheit (120) in der ersten Ebene (104a) der Montagestruktur (101) angeordnet ist, um der nichtbetätigten ausfahrbaren Armeinheit (110) zu ermöglichen, aus der Armspeichereinheit (102) entlang der durch das Armführungselement (130) bestimmten Richtung axial aus- und einzufahren.

4. Robotersystem (10) nach Anspruch 3, wobei die Axialantriebseinheit (120) umfasst:
einen Axialantriebsmotor (121); und
eine Axialantriebsturm-Ritzel-Feder-Anordnung (122), die durch den Axialantriebsmotor (121) angetrieben wird, um die nicht betätigte ausfahrbare Armeinheit (110) axial aus- und einzufahren; und
eine Armbefestigung (123), die mit dem Axialantriebsturm-Ritzel-Feder-Anordnung (122) gekoppelt ist, um die nicht betätigte ausfahrbare Armeinheit (110) axial zu führen, und wobei das Armführungselement (130) mit den Platten (103a) entlang der ersten Ebene (104a) gekoppelt ist, um die nicht betätigte ausfahrbare Armeinheit (110) in einer vorbestimmten Richtung in der Lateralebene während des axialen Aus- und Einfahrens der nicht betätigten ausfahrbaren Armeinheit (110) aus der Armspeichereinheit (102) in Bezug auf die Montagestruktur (101) zu führen.

5. Robotersystem (10) nach Anspruch 1, wobei die nicht betätigte ausfahrbare Armeinheit (110) umfasst:
eine langestreckte Struktur (112) mit einem Paar flacher, flexibler Blechelemente (112a, 112b), die voneinander beabstandet in der Lateralebene ausgerichtet sind; und
mehrere Drahtführungen (113), die innerhalb des beabstandeten Paares der flachen flexiblen Blechelemente (112a, 112b) in einer beabstandeten Weise in der Lateralebene vertikal angeordnet sind, um die nicht betätigte ausfahrbare Armeinheit (110) in der Lateralebene flexibel und dünn und in einer vertikalen Ebene starr und breit zu erhalten, so dass sie federartige Eigenschaften entlang ihrer Längsachse aufweist, um ausgehend von der Armspeichereinheit durch passives Anpassen ihrer eigenen Form in der Lateralebene in eine vorbestimmte Form einer externen Infrastruktur geschoben zu werden.

6. Robotersystem (10) nach Anspruch 1, wobei die Kopfgelenkeinheit (140) umfasst:
einen flexiblen Körper (141), der sich zwischen gegenüberliegenden Enden (143a, 143b) erstreckt, wobei der flexible Körper (141) ein Kopplungsende (144c) aufweist, das mit dem freien Ende (110a) der nicht betätigten ausziehbaren Armeinheit (1 10) gekoppelt ist; und
mehrere Drähte zum Koppeln der Kopfgelenkeinheit (140) mit einem Kopfgelenkmotor (141), der innerhalb der Hauptantriebseinheit (100) angeordnet ist.

7. Robotersystem (10) nach Anspruch 1, wobei die Montagestruktur (201) umfasst:
mehrere Platten (203a), die in Bezug zueinander so angeordnet sind, dass sie erste (204a) und zweite (204b) Ebenen innerhalb der Hauptantriebseinheit (200) bilden, um die Armspeichereinheit (202) in der ersten Ebene (204a) aufzunehmen; und
eine Gehäuseanordnung (205), die die erste Ebene und die zweite Ebene (204a, 204b) abdeckt.

8. Robotersystem (10) nach Anspruch 7, wobei das Armführungselement (230) mit den Platten (203a) entlang der ersten Ebene (204a) gekoppelt ist, um die nicht betätigte ausfahrbare Armeinheit (210) in einer vorbestimmten Richtung in der Lateralebene zu führen, während das axiale Aus- und Einfahren der nicht betätigten ausfahrbaren Armeinheit (210) aus der Armspeichereinheit (202) bezüglich der Montagestruktur (201) erfolgt, und wobei
die Axialantriebseinheit (220) mit Platten (203a) außerhalb der Montagestruktur (201) gekoppelt ist und sich in der Montagestruktur (201) entlang der zweiten Ebene (204b) erstreckt, um der nicht betätigten ausfahrbaren Armeinheit (210) zu ermöglichen, entlang der durch das Armführungselement (230) bestimmten Richtung aus der Armspeichereinheit (202) axial aus- und einzufahren.

9. Robotersystem (10) nach Anspruch 8, wobei die Axialantriebseinheit (220) umfasst:
einen Axialantriebsmotor (221);
eine Axialantrieb-Zahnrad-Riemenanordnung (222), die durch den Axialantriebsmotor (221) angetrieben wird; und
eine Armbefestigung (123), die mit der Axialantrieb-Zahnrad-Riemenanordnung (222) gekoppelt ist, um angetrieben zu werden und die nicht betätigte ausfahrbare Armeinheit (210) axial zu führen, wobei die Armbefestigung (123) mit der nicht betätigten ausfahrbaren Arm-Einheit (210) gekoppelt ist.

10. Robotersystem (10) nach Anspruch 8, wobei das Armführungselement (230) entlang eines Seitenabschnitts der ersten Ebene (204a) gekoppelt ist, um die nicht betätigte ausfahrbare Armeinheit (210) in einer vorbestimmten Richtung in der Lateralebene während des axialen Aus- und Einfahrens der nicht betätigten ausfahrbaren Armeinheit (210) aus der Armspeichereinheit in Bezug auf die Montagestruktur (201) zu führen.

11. Robotersystem (10) nach Anspruch 1, wobei die nicht betätigte ausfahrbare Armeinheit (210) umfasst:
ein flexibles langgestrecktes Blech (211), das in der Lateralebene angeordnet ist, um die nicht betätigte ausfahrbare Armeinheit in der Lateralebene flexibel und dünn zu erhalten, und
mehrere mechanische Segmente (212), die durch mechanische Gelenke (212a) in Reihe verbunden sind und entlang der lateralen Seitenkanten des flexiblen Bleches (211) angeordnet sind, um die nicht betätigte ausfahrbare Armeinheit (210) in der vertikalen Ebene starr und breit zu erhalten, um ausgehend von der Armspeichereinheit durch passives Anpassen ihrer eigenen Form in der Lateralebene in eine vorbestimmte Form einer externen Infrastruktur geschoben zu werden.

12. Robotersystem (10) nach Anspruch 11, wobei die Kopfgelenkeinheit (240) ein Kopplungsende (241a) umfasst, das mit dem freien Ende (210a) der nicht betätigten ausfahrbaren Armeinheit (210) gekoppelt ist, wobei die Kopfgelenkeinheit (240) umfasst:
eine Lenkkettenanordnung (241), die sich über die mechanischen Segmente der Kopfgelenkeinheit (240) erstreckt, indem sie durch die mechanischen Segmente (212) und Gelenke (212a) verläuft,
einen Lenkmotor (242), der mit der Lenkkettenanordnung (241) gekoppelt ist, um die nicht betätigte Lenkkettenanordnung (241) zu betätigen, und
ein Kopfrollengelenk (243), einem Rotationsfreiheitsgrad aufweist und mit der Lenkkettenanordnung (241) gekoppelt ist.

13. Robotersystem (10) nach Anspruch 1, ferner ein Endwerkzeug (300) umfassend, das an der Kopfgelenkeinheit (140, 240) angebracht ist.

14. Robotersystem (10) nach Anspruch 13, wobei das Endwerkzeug (300) eine austauschbare Prüfabtastvorrichtung umfasst, die aufweist:
einen Spreizmechanismus (310), der mit der Kopfgelenkeinheit (140, 240) gekoppelt ist,
eine hintere Kufe (311), die mit dem Spreizmechanismus (310) auf einer Seite gekoppelt ist,
einen Sondenhalter (312) mit wenigstens einer Sonde (312a), wobei der Sondenhalter (312) mit dem Spreizmechanismus (310) auf der anderen Seite gegenüber zu der hinteren Kufe (311) gekoppelt ist, und
eine Linearführung (314), die mit dem Sondenhalter (312) gekoppelt ist, um den Sondenhalter (312) und die Sonden (321a) zu führen.

15. Robotersystem (10) nach Anspruch 14, wobei das Endwerkzeug (300) ein austauschbares Kamerasystem (316) ist, das zum Zweck einer Sichtprüfung an der Kopfgelenkeinheit (140, 240) montiert ist, und
eine Kopplungseinrichtung (316a) aufweist, um das Kamerasystem mit der Kopfgelenkeinheit (140, 240) zu koppeln.

## Revendications

1. Système robotique (10) pour des opérations, telles que des tâches de mesure et de manipulation dans des espaces et des environnements confinés, le système robotique (10) comprenant :
une unité d'entraînement principale (100, 200) ayant :
une structure de montage (101, 201), et
une unité de stockage de bras (102, 202) couplée à la structure de montage (101, 201) ;
une unité de bras extensible non actionnée (110, 210) couplée à l'unité de stockage de bras (102, 202) pour être déplacée axialement dans une direction prédéfinie dans un plan latéral à partir de l'unité de stockage de bras (102, 202), l'unité de bras extensible non actionnée (110, 210) ayant une structure allongée (111, 211) flexible et fine dans le plan latéral, et rigide et large dans un plan vertical ;
une unité d'entraînement axiale (120, 220) couplée à l'unité de stockage de bras (102, 202) pour étendre et rétracter axialement l'unité de bras extensible non actionnée (110, 210) à partir de l'unité de stockage de bras (102, 202) ;
un élément de guidage de bras (130, 203) couplé à l'unité de stockage de bras (102, 202) pour guider l'unité de bras extensible non actionnée (110, 210) dans une direction prédéfinie dans le plan latéral pendant l'extension et la rétraction ; **caractérisé en ce que** le système robotique (10) comprend :
une unité d'articulation de tête (14, 240) couplée à une extrémité libre (110a, 210a) de l'unité de bras extensible non actionnée (110, 210) pour actionner et déplacer l'unité de bras extensible non actionnée (110, 210) dans différentes directions dans les espaces et les environnements confinés.

2. Système robotique (10) selon la revendication 1, comprenant en outre une plateforme de support (400) pour monter l'unité d'entraînement principale (100, 200) sur cette dernière afin de déplacer l'unité d'entraînement principale le long d'une trajectoire prédéfinie, dans lequel la plateforme de support (400) comprend :
une plaque de support (410) adaptée pour monter l'unité d'entraînement principale (100, 200) sur cette dernière ;
un moteur d'entraînement (420) couplé à la plaque de support (410) afin d'entraîner la plateforme de support (400) ; et
un élément de guidage (430) couplé à la plaque de support (410) pour guider l'unité principale d'entraînement (100, 200) le long de la trajectoire prédéfinie.

3. Système robotique (10) selon la revendication 1, dans lequel la structure de montage (101) comprend :
une pluralité de plaques (103a) et de poteaux (103b) agencées les uns par rapport aux autres afin de former des premier (104a) et second (104b) niveaux dans l'unité d'entraînement principale (100) pour loger l'unité de stockage de bras (102) s'étendant sur les premier (104a) et second (104b) niveaux et dans lequel l'unité d'entraînement axiale (120) est disposée dans le premier niveau (104a) de la structure de montage (101) pour permettre à l'unité de bras extensible non actionnée (110) de s'étendre et se rétracter axialement par rapport à l'unité de stockage de bras (102) le long de la direction définie par l'élément de guidage de bras (130).

4. Système robotique (10) selon la revendication 3, dans lequel l'unité d'entraînement axiale (120) comprend :
un moteur d'entraînement axial (121) ; et
un agencement de pignon et de ressort de tour d'entraînement axiale (122) entraîné par le moteur d'entraînement axial (121) pour déployer et contracter axialement l'unité de bras extensible non actionnée (110) ; et
une fixation de bras (123) couplée à l'agencement de pignon et de ressort de tour d'entraînement axiale (122) pour guider axialement l'unité de bras extensible non actionnée (110) et dans lequel l'élément de guidage de bras (130) est couplé aux plaques (103a) le long du premier niveau (104a) pour guider l'unité de bras extensible non actionnée (110) dans une direction prédéfinie dans le plan latéral pendant l'extension et la rétraction axiale de l'unité de bras extensible non actionnée (110) de l'unité de stockage de bras (102) par rapport à la structure de montage (101).

5. Système robotique (10) selon la revendication 1, dans lequel l'unité de bras extensible non actionnée (110) comprend :
une structure allongée (112) ayant une paire d'éléments de feuille flexibles plats (112a, 112b) orientés à distance l'un de l'autre dans le plan latéral ; et
une pluralité de guides de fil (113) positionnés verticalement dans la paire espacée d'éléments de feuille flexibles plats (112a, 112b) de manière espacée dans le plan latéral pour obtenir l'unité de bras extensible non actionnée (110) flexible et fine dans le plan latéral, et rigide et large dans un plan vertical pour présenter des caractéristiques de type ressort le long de son axe longitudinal pour être poussée dans une forme prédéfinie d'une infrastructure externe, à partir de l'unité de stockage de bras en adaptant passivement sa propre forme dans le plan latéral.

6. Système robotique (10) selon la revendication 1, dans lequel l'unité d'articulation de tête (140) comprend :
un corps flexible (141) s'étendant entre les extrémités opposées (143a, 143b), le corps flexible (141) ayant une extrémité d'interface (144c) couplée à l'extrémité libre (110a) de l'unité de bras extensible non actionnée (110) ; et
une pluralité de fils pour coupler l'unité d'articulation de tête (140) avec un moteur d'articulation de tête (141) positionné dans l'unité d'entraînement principale (100).

7. Système robotique (10) selon la revendication 1, dans lequel la structure de montage (201) comprend :
une pluralité de plaques (203a) agencée les unes par rapport aux autres afin de former des premier (204a) et second (204b) niveaux dans l'unité d'entraînement principale (200) pour loger l'unité de stockage de bras (202) dans le premier niveau (204a) ; et
un agencement de boîtier (205) recouvrant les premier et second niveaux (204a, 204b).

8. Système robotique (10) selon la revendication 7, dans lequel l'élément de guidage de bras (230) est couplé aux plaques (203a) le long du premier niveau (204a) pour guider l'unité de bras extensible non actionnée (210) dans une direction prédéfinie dans le plan latéral alors que l'extension et la rétraction axiale de l'unité de bras extensible non actionnée (210) de l'unité de stockage de bras (202) par rapport à la structure de montage (201), et dans lequel :
l'unité d'entraînement axiale (220) est couplée aux plaques (203a) à l'extérieur de la structure de montage (201) et s'étend dans la structure de montage (201) le long du second niveau (204b) pour faire tourner l'unité de bras extensible non actionnée (210) afin de s'étendre et se rétracter axialement à partir de l'unité de stockage de bras (202) le long de la direction définie par l'élément de guidage de bras (230).

9. Système robotique (10) selon la revendication 8, dans lequel l'unité d'entraînement axiale (220) comprend :
un moteur d'entraînement axial (221) ;
un agencement d'engrenage et de courroie d'entraînement axial (222) entraîné par le moteur d'entraînement axial (221) ; et
une fixation de bras (123) couplée à l'agencement d'engrenage et de courroie d'entraînement axial (222) pour être entraînée afin de guider axialement l'unité de bras extensible non actionnée (210), dans lequel la fixation de bras (123) est couplée à l'unité de bras extensible non actionnée (210).

10. Système robotique (10) selon la revendication 8, dans lequel l'élément de guidage de bras (230) est couplé à une partie latérale du premier niveau (204a) pour guider l'unité de bras extensible non actionnée (210) dans une direction prédéfinie dans le plan latéral pendant l'extension et la rétraction axiale de l'unité de bras extensible non actionnée (210) de l'unité de stockage de bras par rapport à la structure de montage (201).

11. Système robotique (10) selon la revendication 1, dans lequel l'unité de bras extensible non actionnée (210) comprend :
une feuille allongée flexible (211) disposée dans le plan latéral pour obtenir l'unité de bras extensible non actionnée flexible et fine dans le plan latéral, et
une pluralité de segments mécaniques (212) raccordés par des joints mécaniques (212a), en série, et positionnés le long des bords latéraux de la feuille flexible (211) pour obtenir l'unité de bras extensible non actionnée (210) rigide et large dans le plan vertical pour être poussée dans une forme prédéfinie d'une infrastructure externe, à partir de l'unité de stockage de bras (202) en adaptant passivement sa propre forme dans le plan latéral.

12. Système robotique (10) selon la revendication 11, dans lequel l'unité d'articulation de tête (240) comprend une extrémité d'interface (241a) couplée à l'extrémité libre (210a) et l'unité de bras extensible non actionnée (210), l'unité d'articulation de tête (240) comprenant :
un agencement de chaîne de direction (241) s'étendant sur les segments mécaniques de l'unité d'articulation de tête (240) en passant par les segments mécaniques (212) et les joints (212a),
un moteur de direction (242) couplé à l'agencement de chaîne de direction (241) pour actionner l'agencement de chaîne de direction (241) non actionné, et
un joint de rouleau de tête (243) ayant un degré de liberté de rotation, et couplé à l'agencement de chaîne de direction (241).

13. Système robotique (10) selon la revendication 1, comprenant en outre un outil d'extrémité (300) fixé sur l'unité d'articulation de tête (140, 240).

14. Système robotique (10) selon la revendication 13, l'outil d'extrémité (300) comprenant un scanner de contrôle échangeable ayant :
un mécanisme d'écartement (310) couplé à l'unité d'articulation de tête (140, 240),
un patin arrière (311) couplé au mécanisme d'écartement (310) d'un côté,
un support de sonde (312) ayant au moins une sonde (312a), le support de sonde (312) étant couplé au mécanisme d'écartement (310) de l'autre côté opposé au patin arrière (311), et
un guide linéaire (314) couplé au support de sonde (312) pour guider le support de sonde (312) et les sondes (321a).

15. Système robotique (10) selon la revendication 14, dans lequel l'outil d'extrémité (300) est un système de caméra échangeable (316) monté sur l'unité d'articulation de tête (140, 240) à des fins de contrôle visuel, et
une interface (316a) pour le système de caméra à coupler à l'unité d'articulation de tête (140, 240).
